# EUROPEAN PATENT APPLICATION

(11) **EP 4 385 624 A1**
(43) Date of publication of application: **19.06.2024**
(21) Application number: 22214268.9
(22) Date of filing: 16.12.2022
(51) Int. Cl.: B03C 11/00, B01D 17/06, C10G 33/02

(54) **A COALESCER ELEMENT WITH A TWO-LAYER ELECTRICAL INSULATION**

(71) Applicant: Sulzer Management AG, 8401 Winterthur (CH)
(72) Inventor: The designation of the inventor has not yet been filed
(74) Representative: Henkel & Partner mbB

(57) **Abstract**

A coalescer element for an electrostatic coalescer device comprises an electrode, which is enclosed by an electrical insulation, wherein the electrical insulation comprises i) an inner layer of an epoxy material and ii) an outer layer of a hydrophobic material.

## Description

The present invention relates to a coalescer element for an electrostatic coalescer device, to an electrostatic coalescer device comprising such a coalescer element, and to a method for protecting the coalescer elements of an electrostatic coalescer device against electrically induced erosion and/or partial discharges during the operation of the electrostatic coalescer device.

The need to separate water/oil mixtures or gas/water/oil mixtures exists in a plurality of technical fields, such as in oil and gas production facilities, oil refineries, chemical plants, gas plants and supply/distribution installations. For instance, crude oil deposits are often mixed with and/or must be accessed through water so that the recovered raw resource is in fact an emulsion of small water droplets in a continuous crude oil phase, which may further contain more or less gas. The aqueous droplets must be separated from the oil phase, in order to maximize the oil yield and in order to ensure that the crude oil meets product quality specifications. In principle, this separation may be achieved in a settling tank allowing the oil and water phases to separate by gravity based on the different densities of both phases. However, this separation technique is very slow and does not lead to an effective separation in particular in cases where the water droplets dispersed in the oil phase are fine and small. Therefore, the phase separation is typically achieved with a coalescer, which promotes coalescence of the dispersed droplet phase of an emulsion, i.e. an increase of the size of the dispersed droplets resulting from a merger of individual dispersed droplets, thus facilitating the phase separation by gravitation.

One class of such coalescers are mechanical coalescers, which effect the coalescence of the dispersed droplet phase of an emulsion by using physical obstructions to the emulsion flow. For example, a plate angled to the horizontal plane is provided in the coalescers so that the water/oil mixture is guided around the horizontal plane, wherein the dispersed water phase - which is denser than the continuous oil phase - coalesces on the plate and then drips down the slope of the plate towards an outlet.

Another effective class of coalescers are electrostatic coalescers, which generate a high voltage electric field in the emulsion. Because water, in particular saltwater, is electrically more polar and conductive than oil, the saltwater droplets dispersed in the continuous oil phase form dipoles attracting each other leading to a coalescence of the saltwater droplets, thus accelerating the phase separation by gravitation. The electrical field is generated by a plurality of high voltage electrodes being provided in the vessel of the electrostatic coalescer, with the electrodes being submerged in the emulsion during the operation of the electrostatic coalescer. Especially in the event of separating water/oil mixtures containing gas and/or high amounts of water in comparison to the amount of oil, it is necessary to electrically insulate any of the high voltage electrodes, which is typically achieved by encasing each electrode with an electrically insulating material, such as with an electrically insulating organic compound, such as for instance with a fluorinated polymer. The enclosed electrodes are also designated as coalescer elements. Without such an electrical insulation, local formations of water continuous emulsions in the water/oil mixture would cause short circuits between adjacent coalescer elements, in particular in the event of separating a water/oil mixture including high amounts of water, such as 30% by weight of water up to water amounts leading to phase inversion of the water/oil mixture, i.e. into an oil in water emulsion. Thereby, the coalescer elements are rendered functionless for a certain amount of time, which drastically reduced the efficiency of the electrostatic coalescer device.

However, even if the electrical insulation protects the coalescer elements of electrostatic coalescer devices against short circuits between adjacent coalescer elements, such electrostatic coalescer devices are not completely satisfying. Namely, in such electrostatic coalescer devices water droplets or large pollutants, such as sand or precipitation from the crude oil, can create a conductive bridge normal to the electrode surface linking the electrical insulating surface of one electrode with the electrical insulating surface of the opposite electrode. The electrical insulation will render it impossible to drive significant resistive currents from one metal electrode to another. However, in an environment, such as in a crude oil emulsion, saltwater droplets can coalesce onto the electrically insulating surface and form large patches of water on the surface containing a large number of ions. In a high voltage electrical field these saltwater patches can be seen as a reservoir of charge, making it possible to create corona discharges going normally from one enclosed electrode surface, through the crude oil, emulsion or gas, and terminating in a water patch on an opposite enclosed electrode or to ground. The destructive impact of these corona discharges to the material enclosing the electrode is dependent on the discharged energy (i.e. the ion content, voltage level, area of the water patches etc.), and the volume of the deposited energy. The smaller the area of the water patches, the less energy is released in each discharge given a potential difference between the electrodes. The current peaks and hence the energy discharge in a corona discharge is related to the conductivity of the saltwater patches and the likelihood of having a corona discharge increases with increased voltage difference and with decreasing surface tension of the saltwater. The reason therefore is that with lower surface tension the saltwater patch is more prone to create sharp tips under the influence of the electric field which then will cause a large field amplification near the tips. The sensitivity of a corona discharge with surface tension mentioned above can be related to the electrodes of the coalescer elements as follows. If the electrical insulation material on the enclosed electrodes is hydrophilic, the enclosed electrodes will tend to be water wetted, meaning that they will form a large water wetted area (patches) on the surface of the electrode when exposed to water in an emulsion, crude oil or gas. The larger the area of such a water film/patch, the less surface energy will be stored in the water film/patch, hence allowing the creation of tips along the direction of the electric field, which is normal to the surface.

Another problem of high voltage electrical isolators is surface deposits. The electric field distribution between the terminal points of electrically insulated electrodes is not crucial as long as the surface resistance is kept high. However, this is problematic if conductive pollutants are allowed to deposit on the surfaces of the electrical insulator. Water from a moist environment will interact with the collected deposits and form a conductive path along the insulating material surface from a terminal point to a terminal point of the concerned electrically insulated electrode(s). This will cause a surface current on the electrical insulator causing a potential short-circuit along the surface (i.e. in plane) with the enclosed surface.

In view of this, the object underlying the present invention is to provide a coalescer element for an electrostatic coalescer device comprising an electrode, which is enclosed by an electrical insulation, which is protected during the operation of the electrostatic coalescer device - even if used for the separation of a water/oil mixture or of a gas/water/oil mixture - against electrically induced erosion and against partial discharges and in particular against corona discharges, but which nevertheless is easily and cost-efficiently producible even in complex shapes, so as to increase the service life of the coalescer elements and in particular the electrical insulations thereof, thereby extending the length of the time intervals, after which the coalescer elements needs to be exchanged by new ones, without reducing the efficiency of the electrostatic coalescer device.

In accordance with the present invention this object is satisfied by providing a coalescer element for an electrostatic coalescer device comprising an electrode, which is enclosed by an electrical insulation, wherein the electrical insulation comprises i) an inner layer of an epoxy material and ii) an outer layer of a hydrophobic material.

On account of the reason that the electrical insulation of the electrode of the coalescer element comprises an inner layer of an epoxy material and an outer layer of a hydrophobic material, not only an easy and cost-efficient production of the electrical insulation even in complex shapes is enabled, but simultaneously a coalescer element is obtained, which is perfectly well protected during its operation in an electrostatic coalescer device - even if used for the separation of a water/oil mixture or of a gas/water/oil mixture - against electrically induced erosion, against partial discharges and in particular against corona discharges. More specifically, the inner layer made of an epoxy material is not only characterized by a very good moldability on the one hand, but also by a very high hardness and durability against electrical discharges on the other hand, whereas the outer layer made of a hydrophobic material improves the wetting characteristics (i.e. non-wettability by water) of the underlying inner layer of an epoxy material so that the aforementioned problems, namely electrical discharges and surface arcing under a given electric field due to saltwater droplets coalescence and surface pollution with conductive pollutants, such as dust, are reliably avoided. On account of the reduced electrical induced erosion for a given electric field, the service life of the coalescer elements and in particular the electrical insulations thereof is increased, thereby extending the length of the time intervals, after which the coalescer elements needs to be exchanged by new ones, without reducing the efficiency of the electrostatic coalescer device.

In accordance with the present invention, the electrical insulation of the coalescer element comprises i) an inner layer of an epoxy material and ii) an outer layer of a hydrophobic material. Epoxy material means in accordance with the present invention any material, which comprises one or more epoxy resins, i.e. one or more cross-linked or non-cross-linked polyepoxides. The polyepoxides or epoxy resins, respectively, may be homo- or copolymers. In addition to the polyepoxides or epoxy resins, respectively, the epoxy material may comprise one or more hardeners or other compounds, such as one or more fillers.

For example, the epoxy material forming the inner layer of the electrical insulation of the coalescer element comprises one or more self-cross-linked epoxy resins, i.e. one or more epoxy resins, each of which being self-cross-linked, for instance as a result of opening epoxy groups of epoxy resin molecules and covalently binding opened epoxy groups of different epoxy resin molecules. Such an opening of epoxy groups or oxirane ring opening, respectively, may be performed in the presence of very strong acids, such as of hexafluorophosphoric acid. In this embodiment, the epoxy material forming the inner layer of the electrical insulation of the coalescer element may consist of the one or more self-cross-linked epoxy resins or may in addition thereto comprise other compounds, such as one or more fillers.

In accordance with an alternative embodiment of the present invention, the epoxy material of the inner layer of the electrical insulation of the coalescer element comprises one or more epoxy resins being cured with a hardener. In this embodiment, the epoxy material of the inner layer of the electrical insulation of the coalescer element may consist of the one or more epoxy resins being cured with a hardener or may in addition thereto comprise other compounds, such as one or more fillers.

In accordance with an alternative, particular preferred embodiment of the present invention, the epoxy material of the inner layer of the electrical insulation of the coalescer element is a composite comprising one or more epoxy resins and a filler being dispersed in the one or more epoxy resins. Such composites are characterized by a very good moldability on the one hand as well as by a very high hardness and durability against electrical discharges on the other hand. Composite means in accordance with the present invention any kind of mixture of one or more epoxy resins and a filler, irrespective of whether physical or chemical bonds at least to a certain extent exist between the one or more epoxy resins and the filler or not. Moreover, the filler allows to reduce the shrinkage, to adjust the thermal expansion of the epoxy material to that of the material of the electrode and to obtain high dielectric strength. For instance, the composite may be a physical mixture of one or more epoxy resins, in which one or more fillers are dispersed without any chemical bonds between molecules of the one or more epoxy resins and the filler. However, it is also possible that non-covalent bonds, such as ionic bonds and hydrogen bonds, or even covalent bonds are present between single epoxy resin molecules and filler molecules, atoms, ions or the like.

The one or more epoxy resins being included in the composite of the aforementioned embodiment may be non-cross-linked, self-cross-linked or cured with a hardener.

The present invention is not particularly limited concerning the chemical nature of the filler. However, good results are in particular obtained, when the filler included in the composite of the inner layer of the electrical insulation of the coalescer element is a mineral and/or ceramic filler.

In a further development of the idea of the present invention, it is suggested that the filler is made of a material comprising one or more compounds being selected from the group consisting of zirconium dioxide, zinc oxide, titanium carbide, silicon carbide, silicon nitride, silicon dioxide, barium titanate and arbitrary combinations of two or more of the aforementioned compounds. In particular, the filler may consist of any of the aforementioned compounds, i.e. it may not comprise any further compound in addition thereto.

Good results are in particular obtained, when the filler is silicon dioxide, a surface-modified silicon dioxide, a coated silicon dioxide or a silicon dioxide being both, surface-modified as well as coated.

In principle, the present invention is not particularly limited concerning the form and size of the filler included in the composite of the inner layer of the electrical insulation of the electrostatic coalescer device. Preferably, the filler is present in the form of powder, granules, pellets or the like. Good results are in particular achieved, when the filler has a d₅₀-particle size of 1 to 1,000 µm. More preferably, the d₅₀-particle size of the filler of the inner layer of the electrical insulation of the coalescer element is 10 to 50 µm and most preferably the d₅₀-particle size of the filler is 15 to 35 µm.

In a further development of the idea of the present invention, it is suggested that the composite of the inner layer of the electrical insulation of coalescer element comprises 30 to 60% by weight of epoxy material and 70 to 40% by weight of filler.

Irrespective of whether the epoxy material forming the inner layer of the electrical insulation of the coalescer element comprises or consists of one or more self-cross-linked epoxy resins, or comprises or consists of one or more epoxy resins being cured with a hardener, or comprises or consists of a composite comprising one or more epoxy resins and a filler being dispersed in the one or more epoxy resins, the present invention is not particularly limited concerning the chemical nature of the one or more epoxy resins being included in the inner layer of the electrical insulation of the electrostatic coalescer device. Preferably, the one or more epoxy resins being included in the inner layer of the electrical insulation of the coalescer element is/are selected from the group consisting of glycidyl amine type epoxy resins, glycidyl ether type epoxy resins, diglycidyl ether type epoxy resins, epoxy resins having a naphthalene skeleton, biphenyl type epoxy resins, dicyclopentadiene type epoxy resins, phenolaralkyl type epoxy resins, diphenylfluorene type epoxy resins and arbitrary combinations of two or more of the aforementioned compounds.

Good results are in particular obtained, when the epoxy resin included in the inner layer of the electrical insulation of the coalescer element is selected from the group consisting of tetraglycidyldiaminodiphenylmethane, triglycidyl-p-aminophenol, triglycidylaminocresols, bisphenol A type epoxy resins, bisphenol F type epoxy resins, bisphenol S type epoxy resins, phenol novolac type epoxy resins, cresol novolac type epoxy resins, resorcinol type epoxy resins and arbitrary combinations of two or more of the aforementioned compounds.

As set out above, the one or more epoxy resins being included or forming, respectively, the inner layer of the electrical insulation of the coalescer element may be non-cross-linked, self-cross-linked or cured with a hardener. Preferably, the inner layer of the electrical insulation of the coalescer element comprises one or more epoxy resins being cured with a hardener. Moreover, it is preferred that the hardener is a compound having one or more amino groups, one or more acid anhydride groups, one or more azido groups, one or more phenol groups, one or more alcohol groups, one or more thiol groups or one or more arbitrary combinations of two or more of the aforementioned groups.

More specifically, the hardener is preferably selected from the group consisting of diamines, aminobenzoic acid esters, acid anhydrides, imidazole derivatives, aliphatic amines, tetramethylguanidine, thiourea addition amines, carboxylic amides, polymercaptans and arbitrary combinations of two or more of the aforementioned compounds.

Good results are in particular obtained, when the hardener is selected from the group consisting of dialkyltoluenediamines, dicyandiamide, diaminodiphenyl methane, diaminodiphenyl sulfones and arbitrary combinations of two or more of the aforementioned compounds.

In accordance with a highly particular preferred embodiment of the present invention, the inner layer of the electrical insulation enclosing an electrode of the coalescer element for an electrostatic coalescer device in accordance with the present invention comprises or preferably consists of a composite comprising 30 to 60% by weight of epoxy material and 70 to 40% by weight of filler, wherein the epoxy material is a diglycidyl ether type epoxy resin being cured with a hardener, and wherein the filler is silicon dioxide, surface-modified silicon dioxide, a coated silicon dioxide or a surface-modified or coated silicon dioxide.

In a further development of the idea of the present invention, it is suggested that the inner layer of the electrical insulation of the coalescer element of the present invention has a thickness of 1 to 40 mm.

In accordance with the present invention, the electrical insulation of the coalescer element comprises i) an inner layer of an epoxy material and ii) an outer layer of a hydrophobic material. Good results are in particular obtained, when the outer layer - i.e. hydrophobic material forming the outer layer - has a contact angle, measured according to ASTM D5946 (2017) between air and saltwater at 23°C, of at least 90° and preferably of at least 110°.

Suitable examples for hydrophobic material for forming the outer layer of the electrical insulation of the coalescer element of the present invention are hydrophobic materials being selected from the group consisting of polysilanes, fluoropolymers, acrylics, polyepoxides, polyethylenes, polystyrenes, polyvinylchlorides, polytetrafluorethylenes, polydimethylsiloxanes, polysiloxanes, polyesters, polyurethanes, hybrid polymers and arbitrary combinations of two or more of the aforementioned compounds. Preferred examples thereof are fluoropolymers, such as polytetrafluoroethylene, and hybrid polymers, such as inorganic-organic hybrid polymers.

In accordance with a particular preferred embodiment of the present invention, the outer layer of the electrical insulation of the coalescer element is made of an inorganic-organic hybrid polymer. Preferably, the inorganic-organic hybrid polymer comprises i) glass and/or ceramic units and ii) organic units. The term "organic unit" of the inorganic-organic hybrid polymer means in this connection a segment of the polymer chain having a substituted or unsubstituted hydrocarbon-backbone. Of course, the hydrocarbon-backbone may comprise heteroatoms, such as -O- in case of polyether segments, -N- in case of polyamine segments, -S- in case of polythiol segments or the like. Moreover, the term hydrocarbon-backbone includes polymer segments of aromatic units bonded to each other and polymer segments of alicyclic units bonded to each other. The inorganic-organic hybrid polymer may be composed of several glass and/or ceramic units, which are connected with each other via organic units, which are chemically bonded to the glass and/or ceramic units. Chemically bonded means in this connection covalently bonded, ionically bonded, bonded by hydrogen bonds or bonded by van-der-Waals-bonds. Preferred are covalent bonds.

Moreover, it is preferred that the inorganic-organic hybrid polymer comprises silicone dioxide units as glass and/or ceramic units and siloxane units and/or substituted or unsubstituted hydrocarbon based polymeric units as organic units. For instance, the inorganic-organic hybrid polymer comprises an organic part being different from a polysiloxane, a polysiloxane part and optionally also an inorganic part, wherein the organic part preferably comprises multifunctional i) urethane and ii) ether(meth)acrylate groups or thioether(meth)acrylate groups, and wherein the polysiloxane part is preferably formed from alkoxysilanes, for instance having the formula RₙSi(OR)_{(4-*n*)}, with R being an alkyl group, such as a C_{1-C4}-alkyl group. The optional inorganic part may comprise silicone dioxide units.

In a further development of the idea of the present invention, it is suggested that the outer layer of the electrical insulation of the coalescer element has a thickness of 10 to 1,000 µm.

The inner layer of the electrical insulation of the coalescer element for an electrostatic coalescer device of the present invention is preferably directly connected with the outer layer of hydrophobic material, i.e. preferably there is no intermediate layer between the inner layer and the outer layer. The inner and outer layers may or may not be connected by means of physical and/or chemical bonds. Even if not preferred, it is possible to provide an intermediate layer between the inner and the outer layer, for instance an intermediate layer functioning as adhesive promoter between the inner and outer layers.

The electrostatic coalescer device may further comprise a transformer, wherein the electrode and the transformer are fully enclosed by the electrical insulation.

A further aspect of the present invention is an electrostatic coalescer device, which comprises:
i) a vessel which contains at least two of the aforementioned coalescer elements and
ii) an AC power source for supplying AC voltage to the electrodes of the at least two coalescer elements.

Preferably, the electrostatic coalescer device further comprises one or more power supplies and one or more frequency converters, which are arranged outside of the vessel, wherein each of the coalescer elements is connected with a frequency converter and each frequency converter is connected with a power supply, wherein each coalescer element comprises an electrode and a transformer, wherein the transformer is electrically connected with the frequency converter and the transformer is electrically connected with the electrode of the coalescer element.

In accordance with another aspect, the present invention relates to a method for protecting the coalescer elements of an electrostatic coalescer device against electrically induced erosion and/or partial discharges, in particular corona discharges, during the operation of the electrostatic coalescer device, wherein the method comprises the following steps:
a) providing an aforementioned electrostatic coalescer device,
b) feeding a water/oil mixture or a gas/water/oil mixture into the vessel and
c) supplying AC voltage to the electrodes of the at least two coalescer elements, thereby separating the water/oil mixture into an oil phase and a water phase or separating the gas/water/oil mixture into a gas phase, an oil phase and a water phase.

Preferably, in step b) the water/oil mixture or a gas/water/oil mixture is fed into the vessel so that all coalescer elements are submerged in the water/oil mixture or a gas/water/oil mixture.

Subsequently, the present invention is described by means of illustrative, but not limiting figures, in which:
- Fig. 1: shows a schematic view of an electrostatic coalescer device comprising a coalescer element in accordance with one embodiment of the present invention.
- Fig. 2: shows an electrical schematic sketch of the electrostatic coalescer device shown in figure 1 as seen from the low voltage side and as described in the example.

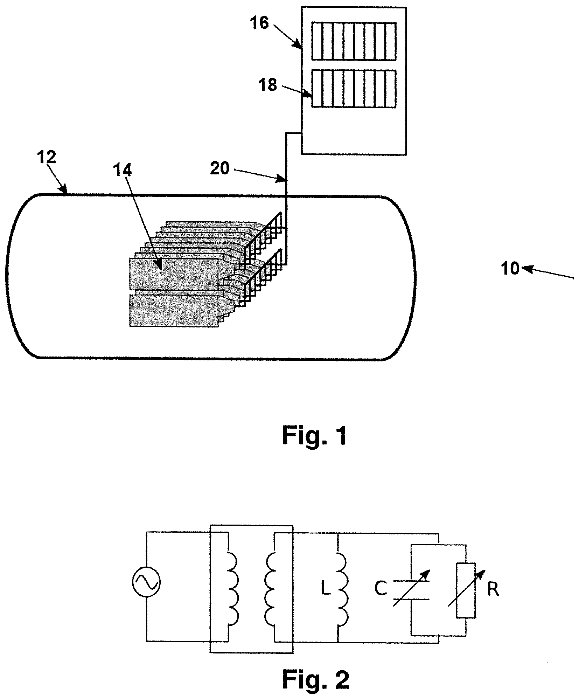

The electrostatic coalescer device 10 shown in figure 1 comprises a vessel 12, which contains a plurality of coalescer elements 14, wherein each coalescer element 14 comprises an electrode, which is enclosed by an electrical insulation. Moreover, the electrostatic coalescer device 10 comprises outside of the vessel 10 AC power sources 16 and frequency converters 18, wherein each of the coalescer elements 14 is connected with a frequency converter 18 and each frequency converter 18 is connected with a power supply 16. From each of the frequency converters 18 a low voltage line 20 leads to an electrode to connect the electrode with the respective frequency converter 18. In addition, the electrostatic coalescer device 10 comprises a controller (not shown), which is embodied for instance so that it time-resolved determines during the operation of the electrostatic coalescer device 10 the electrical impedance of each of the electrodes of the coalescer elements 14. Thus, the voltage of each electrode of each of the coalescer elements 14 may be individually and time-resolved controlled.

An electrical schematic sketch of the electrostatic coalescer device shown in figure 1 as seen from the low voltage side is shown in figure 2. It comprises on the left a voltage source and in the middle and on the right a high voltage coalescer element comprising a transformer and an electrode, both being enclosed in an electrical insulation. The transformer has an inductance L and the electrode has a variable resistance R and variable capacitance C. The capacitor and the resistor are time varying, while the inductor is constant. The inductor represents the inductance in the transformer and as such is constant in time. The capacitor and the resistor will vary during operation of the electrostatic coalescer device. They will depend on the amount of water in the water-oil emulsion, the temperature of the emulsion, the water drop-out of the emulsion among others. All of the said time variation will have a time scale of several seconds to minutes.

### Reference Numerals

- 10: Electrostatic coalescer device
- 12: Vessel
- 14: Coalescer element
- 16: AC power source
- 18: Frequency converter
- 20: Low voltage line

## Claims

1. A coalescer element (14) for an electrostatic coalescer device (10) comprising an electrode, which is enclosed by an electrical insulation, wherein the electrical insulation comprises i) an inner layer of an epoxy material and ii) an outer layer of a hydrophobic material.

2. The coalescer element (14) of claim 1, wherein the epoxy material comprises one or more self-cross-linked epoxy resins or consists of a self-cross-linked epoxy resin.

3. The coalescer element (14) of claim 1 or 2, wherein the epoxy material comprises a composite comprising one or more epoxy resins and a filler being dispersed in the one or more epoxy resins or consists of a composite comprising one or more epoxy resins and a filler being dispersed in the one or more epoxy resins, wherein preferably the filler is made of a material comprising or consisting of a compound being selected from the group consisting of zirconium dioxide, zinc oxide, titanium carbide, silicon carbide, silicon nitride, silicon dioxide, barium titanate and arbitrary combinations of two or more of the aforementioned compounds.

4. The coalescer element (14) of claim 3, wherein the composite comprises 30 to 60% by weight of epoxy material and 70 to 40% by weight of filler.

5. The coalescer element (14) of any of the preceding claims, wherein the one or more epoxy resins comprise(s) an epoxy resin being selected from the group consisting of glycidyl amine type epoxy resins, glycidyl ether type epoxy resins, diglycidyl ether type epoxy resins, epoxy resins having a naphthalene skeleton, biphenyl type epoxy resins, dicyclopentadiene type epoxy resins, phenolaralkyl type epoxy resins, diphenylfluorene type epoxy resins and arbitrary combinations of two or more of the aforementioned compounds.

6. The coalescer element (14) of any of the preceding claims, wherein the epoxy material comprises an epoxy resin being cured with a hardener being preferably a compound having one or more amino groups, one or more acid anhydride groups, one or more azido groups, one or more phenol groups, one or more alcohol groups, one or more thiol groups or one or more arbitrary combinations of two or more of the aforementioned groups, wherein preferably the hardener is selected from the group consisting of diamines, aminobenzoic acid esters, acid anhydrides, imidazole derivatives, aliphatic amines, tetramethylguanidine, thiourea addition amines, carboxylic amides, polymercaptans and arbitrary combinations of two or more of the aforementioned compounds.

7. The coalescer element (14) of any of the preceding claims, wherein the inner layer has a thickness of 1 to 40 mm.

8. The coalescer element (14) of any of the preceding claims, wherein the outer layer has a contact angle, measured between air and saltwater at 23°C, of at least 90°, preferably of at least 120° and more preferably of at least 150°.

9. The coalescer element (14) of any of the preceding claims, wherein the outer layer is made of a hydrophobic material being selected from the group consisting of polysilanes, fluoropolymers, acrylics, polyepoxides, polyethylenes, polystyrenes, polyvinylchlorides, polytetrafluorethylenes, polydimethylsiloxanes, polysiloxanes, polyesters, polyurethanes, hybrid polymers and arbitrary combinations of two or more of the aforementioned compounds.

10. The coalescer element (14) of claim 9, wherein the outer layer is made of an inorganic-organic hybrid polymer, which preferably comprises glass and/or ceramic units and organic units.

11. The coalescer element (14) of claim 10, wherein the inorganic-organic hybrid polymer comprises an organic part being different from, a polysiloxane part and optionally also an inorganic part, wherein the organic part preferably comprises multifunctional i) urethane and ii) ether(meth)acrylate groups or thioether(meth)acrylate groups, and wherein the polysiloxane part is preferably formed from alkoxysilanes, for instance having the formula RₙSi(OR)_{(4-*n*)}, with R being an alkyl group, such as a C_{1-C4}-alkyl group.

12. The coalescer element (14) of any of the preceding claims, wherein the outer layer has a thickness of 10 to 1,000 µm.

13. An electrostatic coalescer device (10) comprising:
i) a vessel (12) which contains at least two coalescer elements (14) of any of the preceding claims and
ii) an AC power source (16) for supplying AC voltage to the electrodes of the at least two coalescer elements (14).

14. The electrostatic coalescer device (10) of claim 13, wherein the electrostatic coalescer device (10) further comprises one or more power supplies and (16) one or more frequency converters (18), which are arranged outside of the vessel (12), wherein each of the coalescer elements (14) is connected with a frequency converter (18) and each frequency converter (18) is connected with a power supply (16), wherein each coalescer element (14) comprises an electrode and a transformer, wherein the transformer is electrically connected with the frequency converter (18) and the transformer is electrically connected with the electrode of the coalescer element (14).

15. A method for protecting the coalescer elements (14) of an electrostatic coalescer device (10) against electrically induced erosion and/or partial discharges during the operation of the electrostatic coalescer device (10) comprising the following steps:
a) providing an electrostatic coalescer device (10) of claim 13 or 14,
b) feeding a water/oil mixture or a gas/water/oil mixture into the vessel (12) and
c) supplying AC voltage to the electrodes of the at least two coalescer elements (14), thereby separating the water/oil mixture into an oil phase and a water phase or separating the gas/water/oil mixture into a gas phase, an oil phase and a water phase.
